# EUROPEAN PATENT APPLICATION

(11) **EP 4 826 649 A1**
(43) Date of publication of application: **21.10.2026**
(21) Application number: 25461521.4
(22) Date of filing: 18.04.2025
(51) Int. Cl.: G06T 7/00

(54) **COMPUTER-IMPLEMENTED METHOD, SYSTEM AND COMPUTER PROGRAM PRODUCT FOR ANALYSIS OF MRI IMAGES AND LABORATORY PARAMETERS IN MULTIPLE SCLEROSIS DIAGNOSIS AND MONITORING**

(71) Applicant: Pixel Technology Sp. z o.o., 93-558 Lodz (PL)
(72) Inventor: MUSIALEK, Jakub, 95-050 Konstantynow Lodzki (PL); BOBEFF, Ernest, 93-558, Lodz (PL); PUZIO, Tomasz, 93-558 Lodz (PL)
(74) Representative: Kancelaria Eupatent.pl Sp. z o.o.

(57) **Abstract**

A computer-implemented method for analyzing medical images and detecting focal lesions in multiple sclerosis, comprising: receiving (101) a series of MRI images comprising T1, T2, and FLAIR sequences; applying (102) a trained classifier to detect and segment focal lesions within the brain tissue; calculating (103) the volume of each detected lesion; tracking (104) lesion volume changes between sequential examinations performed over time; analyzing (105) cerebrospinal-fluid laboratory parameters including albumin, IgG, IgM, and IgA levels; and determining (106) the probability of multiple sclerosis diagnosis based on the correlation between imaging findings and laboratory parameters using a trained machine-learning algorithm.

## Description

### TECHNICAL FIELD

The invention relates to a computer-implemented method, a system, and a computer program product for analyzing MRI images, detecting and quantifying focal lesions, and correlating these findings with laboratory parameters to aid in the diagnosis and monitoring of multiple sclerosis.

### BACKGROUND

Multiple sclerosis (MS) is a chronic inflammatory demyelinating disease of the central nervous system and a leading cause of disability in young adults worldwide. Early and accurate diagnosis of MS remains challenging, relying on a combination of clinical, imaging, and laboratory findings. Current diagnostic approaches involve analyzing MRI scans to detect characteristic lesions and examining cerebrospinal fluid (CSF) parameters, but these analyses are typically performed independently and require significant expertise for interpretation.

In MRI imaging for MS diagnosis, several sequences are routinely acquired, including T1-weighted, T2-weighted, and FLAIR (Fluid Attenuated Inversion Recovery) images. These sequences can be thought of as a multimodal 3D volume, with three spatial dimensions across multiple acquisition techniques, showing different aspects of the same brain tissue. In MS patients, these images show characteristic demyelinating lesions that appear as focal hyperintensities in T2-weighted and FLAIR images, and sometimes as hypointensities (black holes) in T1-weighted images.

Serial MRI scans performed over time are crucial for monitoring disease progression, as new lesions may develop or existing lesions may change in size. However, manual quantification of lesion volume and tracking changes between examinations is time-consuming, subjective, and prone to human error. Furthermore, integrating this imaging information with laboratory parameters from CSF analysis represents a significant challenge in clinical practice.

Current approaches for MS diagnosis and monitoring typically involve separate analysis of MRI and laboratory data. Several techniques exist for automated lesion segmentation, most relying on machine learning algorithms trained to identify lesions based on their characteristic appearance in different MRI sequences. Additionally, laboratory analysis of CSF parameters, including albumin, IgG, IgM, and IgA levels, provides valuable information about inflammatory processes within the central nervous system.

The scientific literature has shown that combining imaging and laboratory findings improves diagnostic accuracy for MS. For example, studies have demonstrated that the presence of specific MRI lesion patterns, together with elevated intrathecal immunoglobulin synthesis, significantly increases the probability of MS diagnosis. However, there remains a need for automated methods that can integrate and analyze these diverse data types simultaneously.

### SUMMARY OF THE INVENTION

Thus, the objective technical problem to be solved by the invention is to enhance the detection and quantification of MS lesions in MRI images, track their changes over time, and correlate these findings with laboratory parameters to improve diagnostic accuracy and disease monitoring.

The problem is solved by the invention according to the independent claims. Preferred embodiments are described in the dependent claims.

In a first aspect, the invention relates to a computer-implemented method for analyzing MRI images and laboratory parameters in multiple sclerosis, comprising the steps of:
a. receiving a series of MRI images comprising T1, T2, and FLAIR sequences;
b. applying a trained classifier to detect and segment focal lesions within the brain tissue;
c. calculating the volume of each detected lesion;
d. racking lesion volume changes between sequential examinations performed over time;
e. analyzing cerebrospinal fluid laboratory parameters including albumin, IgG, IgM, and IgA levels;
f. determining the probability of multiple sclerosis diagnosis based on the correlation between imaging findings and laboratory parameters using a trained machine learning algorithm.

The MRI sequences may be acquired using standard clinical protocols, with each image comprising three spatial dimensions. The focal lesions identified in these images represent areas of demyelination characteristic of MS. Laboratory parameters are obtained from standard CSF analysis performed during diagnostic workup.

Within the framework of this invention, the trained classifier for lesion detection is preferably implemented as a convolutional neural network (CNN) optimized for multimodal image analysis. The classifier is trained by optimizing over the similarity between predicted lesion masks and ground truth lesion masks manually annotated by expert neuroradiologists using a set of training examples.

For lesion tracking across sequential examinations, the method employs image registration techniques to align scans from different time points, enabling precise comparison of lesion volumes. This analysis generates quantitative metrics for disease progression, including the rate of new lesion formation and changes in existing lesion volumes.

The analysis of laboratory parameters involves not only the direct measurements of albumin and immunoglobulins in CSF and serum but also the calculation of derived metrics such as the albumin quotient (Qalb) and immunoglobulin indices. These parameters provide information about blood-brain barrier integrity and intrathecal antibody synthesis, which are relevant to MS pathophysiology.

The final step involves a second machine learning algorithm that integrates imaging features (including lesion number, volume, location, and temporal dynamics) with laboratory parameters to produce a diagnostic probability. This algorithm is trained on a dataset of confirmed MS cases and controls, optimizing for diagnostic accuracy.

In an embodiment, the method further incorporates perfusion imaging analysis to evaluate blood-brain barrier disruption in areas adjacent to focal lesions. This analysis utilizes the approach described in prior art for determining vascular functions of perfusion imaging sequences, comprising:
a. receiving a perfusion imaging sequence comprising voxel time series for a plurality of voxels;
b. applying a trained classifier on the perfusion imaging sequence for yielding voxel-wise weights;
c. receiving voxel-wise weights from the classifier; and;
d. determining the vascular function as the weighted sum of the voxel time series;
wherein the classifier is trained by optimizing over the similarity between a predicted vascular function and a ground truth vascular function using a set of examples.

In an embodiment, the trained classifier for lesion detection uses a U-Net architecture, which has been shown to be particularly effective for medical image segmentation tasks. The network comprises multiple convolutional layers with skip connections to preserve spatial information across different levels of feature abstraction.

In another embodiment, the method includes texture analysis of detected lesions to characterize their internal structure, which may provide additional information about lesion age and pathological status (active vs. inactive). This analysis employs statistical methods to quantify textural features such as homogeneity, contrast, and entropy.

In another aspect, the invention relates to a system for analyzing MRI images and laboratory parameters in multiple sclerosis diagnosis and monitoring, comprising:
a. means for receiving and processing MRI sequences including T1, T2, and FLAIR;
b. means for detecting focal lesions and calculating their volume;
c. means for comparing lesion volumes between sequential examinations;
d. means for acquiring and analyzing cerebrospinal fluid parameters;
e. means for correlating imaging findings with laboratory parameters; and
f. means for generating a diagnostic probability output indicating likelihood of multiple sclerosis.

In an embodiment, the system further comprises a database for storing and retrieving patient-specific historical imaging and laboratory data to enable longitudinal analysis of disease progression.

In another aspect, the invention relates to a computer program product for analyzing MRI images and laboratory parameters in multiple sclerosis, comprising computer readable instructions for causing the system according to an embodiment of the invention to execute the method according to an embodiment of the invention.

The present invention offers several advantages over existing approaches:
- integration of multimodal MRI analysis with laboratory parameters provides a more comprehensive assessment than either approach alone;
- automated tracking of lesion volume changes over time enables objective quantification of disease progression;
- the correlation of imaging findings with laboratory parameters improves diagnostic accuracy for MS;
- the system can be used to predict treatment response based on baseline imaging and laboratory characteristics.

The invention has particular relevance for neurologists, neuroradiologists, and researchers involved in MS diagnosis and clinical trials of MS therapeutics. By providing objective, quantitative measures of disease status and progression, it facilitates more informed clinical decision-making and enables more sensitive outcome measurements for clinical trials.

These and other features, aspects and advantages of the invention will become better understood with reference to the following drawings, descriptions and claims.

### BRIEF DESCRIPTION OF DRAWINGS

The invention is shown by means of example embodiments in a drawing, wherein:
Fig. 1 shows an example of a method according to the present invention;
Fig. 2 shows an example of a computer system for performing the method.

### DETAILED DESCRIPTION

The following detailed description is of the best currently contemplated modes of carrying out the invention. The description is not to be taken in a limiting sense, but is made merely for the purpose of illustrating the general principles of the invention.

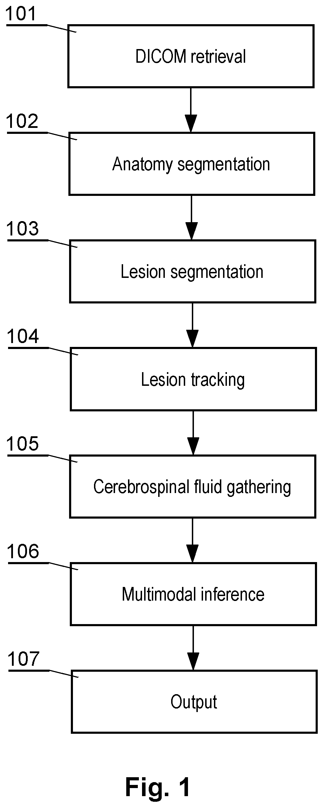

Figure 1 schematically illustrates a computer-implemented method for analysing magnetic-resonance images together with laboratory parameters in the context of multiple-sclerosis diagnosis and monitoring. In step 101, a Digital Imaging and Communications in Medicine (DICOM) data set comprising the current magnetic-resonance examination of the patient and, when available, at least one previous examination of the same patient, is retrieved.

The retrieved data are forwarded to a pre-processing step 102, wherein a trained convolutional neural network trained to delineate major brain structures such as white matter, grey matter, ventricular cavities and the brain stem is used to perform anatomy segmentation. The resulting anatomical masks confine subsequent analyses to clinically relevant tissues.

A lesion-segmentation step 103 then operates on the pre-processed, multimodal image volumes and produces voxel-wise masks that identify demyelinating lesions characteristic of multiple sclerosis. Lesion size, centroid co-ordinates and anatomical compartment are stored for each lesion.

Because longitudinal assessment is decisive for therapeutic decisions, a lesion-tracking step 104 aligns the current and previous examinations by image registration and determines, for every lesion, whether its volume has increased, decreased or remained stable. New lesions are automatically distinguished from pre-existing ones.

In parallel, a laboratory-data gathering step 105 retrieves cerebrospinal-fluid and serum measurements, such as albumin, immunoglobulin G, immunoglobulin M and immunoglobulin A concentrations, from a laboratory-information system. Derived indices such as the albumin quotient and immunoglobulin indices are calculated as well in this step.

Finally, a multimodal-inference step 106 fuses the imaging biomarkers produced in the foregoing steps with the laboratory parameters so obtained and computes (i) a probability that the patient fulfils diagnostic criteria for multiple sclerosis and (ii) a quantitative disease-activity score. The method terminates with the provision of these outputs to the user in step 107.

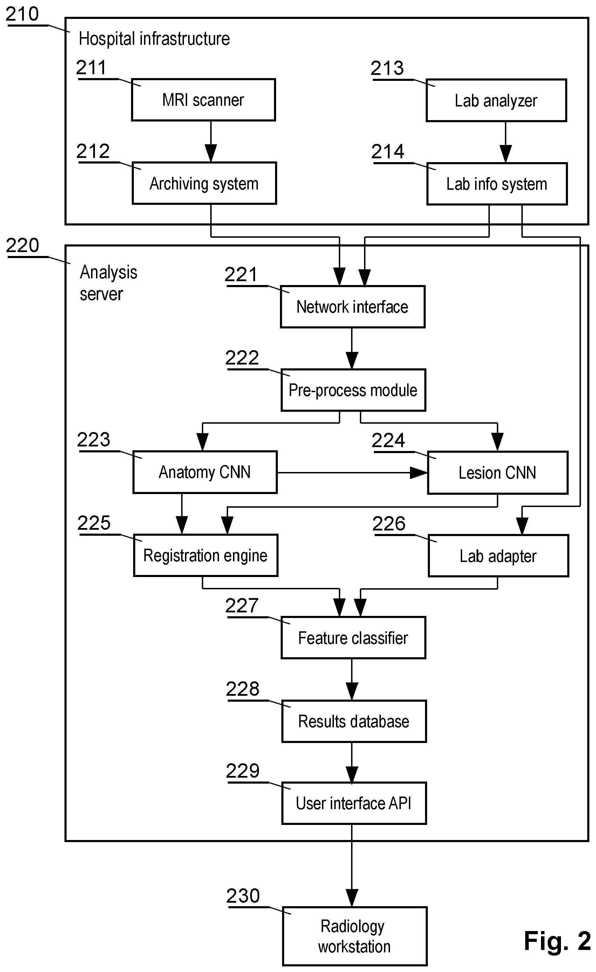

Figure 2 presents a block diagram of a system configured to execute the method of Figure 1. The system interfaces with the existing hospital infrastructure 210, which comprises an MRI scanner 211 that stores image data in a Picture Archiving and Communication System (PACS) 213 and a laboratory analyser 213 that records test results in a Laboratory Information System (LIS) 214.

At the analysis server 220, a network-interface module 221 performs secure communication with the PACS 212 and LIS 214, respectively, and passes incoming image data to a pre-processing module 222. The pre-processing module standardises image intensities, corrects bias fields and harmonises voxel resolution before forwarding the data to an anatomy convolutional neural network 223 and a lesion convolutional neural network 224.

Outputs of the anatomy convolutional neural network 223 are supplied both to the lesion convolutional neural network 224, in order to restrict the lesion search space, and to a registration engine 225, which spatially aligns sequential examinations of the same patient. The lesion convolutional neural network 224 provides its lesion masks to the registration engine 225 for temporal correspondence analysis.

A laboratory adapter 226 converts laboratory messages obtained from the LIS 214 into an internal data structure and supplies these values to a feature-fusion and classifier module 227 that also ingests imaging features delivered by the registration engine 225 and produces diagnostic probabilities and disease-activity metrics, which it stores in a results database 228.

A user-interface application-programming interface (API) 229 makes the contents of the results database 208 available to a radiology workstation 231 or other clinical information systems, thereby enabling seamless integration of the invention into existing diagnostic workflows.

The combination of modules 221 through 229 within the analysis server 220 thus provides an end-to-end technical solution that automatically merges multimodal magnetic-resonance imaging and laboratory data, tracks disease evolution over time and furnishes objective, quantitative outputs for clinical decision-making.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A computer-implemented method for analyzing medical images and detecting focal lesions in multiple sclerosis, comprising:
- receiving (101) a series of MRI images comprising T1, T2, and FLAIR sequences;
- applying (102) a trained classifier to detect and segment focal lesions within the brain tissue;
- calculating (103) the volume of each detected lesion;
- tracking (104) lesion volume changes between sequential examinations performed over time;
- analyzing (105) cerebrospinal-fluid laboratory parameters including albumin, IgG, IgM, and IgA levels; and
- determining (106) the probability of multiple sclerosis diagnosis based on the correlation between imaging findings and laboratory parameters using a trained machine-learning algorithm.

2. The method according to claim 1, wherein the trained classifier is a convolutional neural network trained to identify demyelinating lesions characteristic of multiple sclerosis.

3. The method according to claim 1, wherein the method further comprises calculating (105) an albumin quotient and immunoglobulin indices from the cerebrospinal-fluid and serum measurements.

4. The method according to claim 1, wherein the method further determines (104) whether a focal lesion is increasing or decreasing in size over time by comparing sequential MRI examinations.

5. The method according to claim 1, wherein the method further comprises applying a vascular-function analysis to perfusion-imaging sequences to evaluate blood-brain-barrier disruption in areas adjacent to the focal lesions.

6. The method according to claim 5, wherein the vascular-function analysis comprises:
- receiving a perfusion-imaging sequence comprising voxel time series for a plurality of voxels;
- applying a trained classifier on the perfusion-imaging sequence for yielding voxel-wise weights;
- receiving voxel-wise weights from the classifier; and
- determining the vascular function as the weighted sum of the voxel time series;
wherein the classifier is trained by optimizing over the similarity between a predicted vascular function and a ground-truth vascular function using a set of examples.

7. A system for analyzing multiple-sclerosis progression using integrated imaging and laboratory data, comprising:
- means for receiving (221) and processing (222) MRI sequences including T1, T2, and FLAIR;
- means (224) for detecting focal lesions and calculating their volume;
- means (225) for comparing lesion volumes between sequential examinations;
- means (226) for acquiring and analyzing cerebrospinal-fluid parameters;
- means (227) for correlating imaging findings with laboratory parameters; and
- means (227) for generating a diagnostic-probability output indicating likelihood of multiple sclerosis.

8. The system according to claim 7, wherein the system further comprises a database (228) for storing and retrieving patient-specific historical imaging and laboratory data to enable longitudinal analysis of disease progression.

9. A computer-program product for analyzing multiple sclerosis using integrated medical-imaging and laboratory data, comprising computer-readable instructions for causing a computing system (220) to execute the method according to any of claims 1 to 6.

10. The computer-program product according to claim 9, wherein the product further comprises visualization functionality that displays three-dimensional representations of detected lesions with colour-coding to indicate changes in lesion size over time (229).
